# EUROPEAN PATENT SPECIFICATION

(11) **EP 2 395 790 B1**
(45) Date of publication and mention of the grant of the patent: **31.07.2013**
(21) Application number: 10290314.3
(22) Date of filing: 10.06.2010
(51) Int. Cl.: H04W 36/00

(54) **A wireless network and a method of handover of a call connection**
Drahtloses Netzwerk und Verfahren zur Weiterreichung einer Anrufsverbindung
Réseau sans fil et procédé de transfert d'une connexion d'appel

(43) Date of publication of application: 14.12.2011
(73) Proprietor: Alcatel Lucent, 75007 Paris (FR)
(72) Inventor: Brend, Graham R., Bath, Somerset BA1 7UE (GB); Putman, Tony, Chippenham, Wiltshire SN15 4AQ (GB); Sapiano, Philip C., Corsham, Wiltshire SN13 9AY (GB); Bradley, Nigel L., Cricklade, Wiltshire SN6 6LT (GB)
(74) Representative: Sarup, David Alexander

(56) References cited:
- WO-A1-2008/088592
- US-A1- 2009 129 341
- US-A1- 2010 093 351
- US-A1- 2010 093 358

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as small cells, microcells, picocells, or femtocells, but we use the term femtocells generically for cells that are smaller than macrocells. One way to establish a femtocell is to provide a femtocell base station that operates within a relatively limited range within the coverage area of a macrocell. One example of use of a femtocell base station is to provide wireless communication coverage within a building.

The femtocell base station is of a relatively low transmit power and hence each femtocell is of a small coverage area compared to a macrocell.

Femtocell base stations are intended primarily for users belonging to a particular home or office. Femtocell base stations may be private access, public access or hybrid access. In femtocell base stations that are private access, access is restricted only to registered users, for example family members or particular groups of employees. In femtocell base stations that are public access, any user may also use the femtocell base station. In hybid access, any user may use the femtocell base station but registered users are treated preferentially.

One known type of Femtocell base station uses a broadband Internet Protocol connection as "backhaul", namely for connecting to the core network. One type of broadband Internet Protocol connection is a Digital Subscriber Line (DSL). The DSL connects a DSL transmitter-receiver ("transceiver") of the femtocell base station to the core network. The DSL allows voice calls and other services provided via the femtocell base station to be supported. The femtocell base station also includes a radio frequency (RF) transceiver connected to an antenna for radio communications.

Femtocell base stations are sometimes referred to as femtos.

One problem of femtocell base stations, particularly those involving code division multiple access, such as those in accordance with current Third Generation Partnership Project (3GPP) Universal Mobile Telecommunications System (UMTS) standards, is that there are few primary scrambling codes (PSCs) available. Primary scrambling codes are used in broadcasts by base stations over the radio interface to allow a user terminal in the network to distinguish between neighbouring base stations. Typically, there are between six and sixteen PSCs that are available to the femtocells. The PSC to be used by each femtocell base station is normally selected by an automatic configuration process based on measurements made by that femtocell base station. For example, a femto detects from received signals which PSCs are in use by other base stations around that femto, and selects a PSC that the femto has not detected as being in use, else it selects the PSC of the weakest signal received. In consequence typically each of the available primary scrambling codes is used by multiple femtos, in other words there is much primary scrambling code "re-use".

As is known, user terminals which are currently in a cell make measurements as to signals received from other nearby base stations, and report these measurements to the base station of that cell. This is so as to determine whether it is appropriate to handover the call connection with the user terminal from that cell to another cell from which a better quality signal is received.

With this level of PSC reuse, there is a strong chance that user terminals served by a femto will detect signals from multiple different cells having the same primary scrambling code. There is no unique cell identifier, Cell ID, reported in the user terminal's measurement report according to current (pre release 9) 3GPP standards. Accordingly, it is difficult to use user terminals' measurements to automatically determine the target femto for femto-to-femto handover. This is because there is ambiguity or uncertainty as to which of the neighbouring femtos using that PSC provides the best signal to the user terminal and hence should be the handover target.

In order to be integrated with a macrocell network, femtocell base stations may need to exchange signalling messages with various network elements within the (second generation/ 2.5 generation(2.5G) /third generation) macrocell network. This signalling is compliant with the relevant Third Generation Partnership Project (3GPP) Standard, such that femtocells appear as one or more 3GPP compliant nodes. To achieve this, femtocell base stations are grouped into clusters, each cluster being connected via a gateway, known as a femto-gateway, to the macrocell network. The femto-gateway terminates the signalling between core network elements in the macrocell network and the femtocell cluster, thereby enabling the whole cluster of femtocells to appear as a single virtual radio network controller (RNC), as required by 3GPP standards.

As mentioned above, when performing a handover to another femto, known as the target femto, the source femto or the femto-gateway to which the source femto is assigned needs to identify to which femto the handover is to be made. However, as primary scrambling codes are reused, the source femto or femto-gateway cannot rely on the primary scrambling code value reported by the user terminal to uniquely identify the target cell.

Efficient determination of target cells for handovers is required to maintain good quality of service to user terminals by minimising interruptions in on-going call sessions. This is particularly important in the scenario of an enterprise or office building in which multiple femtos are deployed between which handovers will frequently occur as office workers move around.

Some approaches to selecting a target femto are known but they have disadvantages. One known approach is for the source femto or femto-gateway to use the limited information provided of the Primary Scrambling Code, to select randomly as a target femto from amongst the group of neighbouring femtos using that PSC. This is done as part of the handover decision/request procedure. This may lead to an increase in the average duration of the handover procedure as handover attempts to unsuitable femtos are made but not completed. The increase in duration of a handover procedure may in turn impact users' calls, for example causing packet loss and even call drop.

Another known approach is to initiate handover procedures in all of neighbouring femtos using that primary scrambling code. This results in wasted signalling and wasted allocation of radio resources in all those femtos except for the one that the call is actually handed over to.

It is known from United States Patent Publication US2009/0129341 to provide a method of handover of a call connection with a user terminal from a first base station for wireless telecommunications to a second base station for wireless communications comprising identifying the second base station from amongst a group of handover candidate base stations by:
providing the base stations in the group with the uplink scrambling code used by the user terminal,
the base stations in the group seeking to detect a signal from the user terminal encoded with that uplink scrambling code,
the or each base station that detects said signal informing the first base station of detecting said signal,
the first base station selecting as said second base station for handover the base station or one of the base stations that informed of detecting said signal.

### Summary

The present invention is characterised over the disclosure of US2009/0129341 in that each base station comprises a memory in which is stored a list of identified neighbours, and the or each base station that detects said signal records the first base station as a neighbour.

The reader is referred to the appended independent claims. Some preferred features are laid out in the dependent claims.

Preferred embodiments advantageously improve the accuracy of selection of the target femtocell base station for a handover from femtocell base station to femtocell base station, since base stations are provided with indications of which other base stations are their likely neighbours. In consequence there is an increased chance of successful handover as the source femtocell base station (or a femto-gateway) controlling the handover is provided with useful additional information with which to select a handover target. In consequence, the risk is reduced of dropped calls and wasted resources due to unsuccessful handover attempts.

In preferred embodiments, the femtocell base station may continue with normal transmit- and receive- operations at that time, so does not switch into a separate receive-only mode (sometimes known as a sniffer mode) for detection of neighbour cells. Accordingly, the femtocell base station does not temporarily go out of service whilst updating information as to their neighbours.

Preferred embodiments of the present invention provide increased confidence in identification of the correct target femto for handover from amongst femtos neighbouring the femto that is the handover source to which the call is connected.

In some embodiments, the source femtocell base station is provided with information about its neighbouring femtocell base stations before a handover of a user terminal is required. In consequence, there may be better accuracy and less delay in selecting the correct handover target.

### Brief Description of the Drawings

Embodiments of the present invention will now be described by way of example and with reference to the drawings, in which:
Figure 1 is a diagram illustrating a telecommunications network including femtos (one of which is shown for simplicity) according to a first embodiment,
Figure 2 is a diagram illustrating a femto and several neighbouring femtos connected via the IP Internet in the network shown in Figure 1, and
Figure 3 is a diagram illustrating the femto in more detail,
Figure 4 is a message sequence diagram illustrating use of Uplink scrambling code detection in identifying a handover target in advance of potential handovers, and
Figure 5 is a message sequence diagram illustrating use of uplink scrambling code detection in identifying a handover target upon a handover being required.

### Detailed Description

We now describe a network including femtocell base stations then look in greater detail at how the individual best target cell for handover, or a small set of target cells for handover, is identified.

### Network

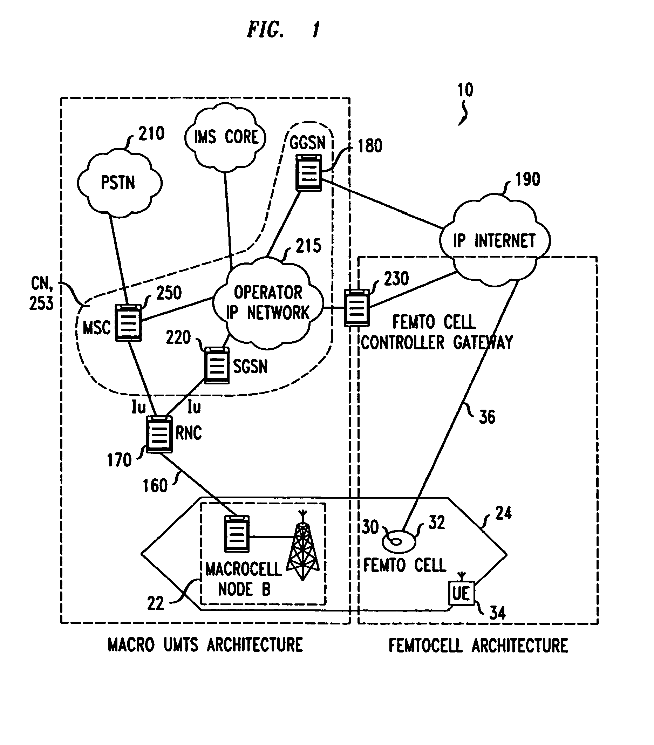

As shown in Figure 1, a network 10 for wireless communications, through which a user terminal 34 may roam, includes two types of base station, namely macrocell base stations and femtocell base stations. (A femtocell base station is sometimes called a "femto", or to use stricter Third Generation Partnership Project terminology, a "Home NodeB", hence a "HNB"). One macrocell base station 22 is shown in Figure 1 for simplicity. Each macrocell base station has a radio coverage area 24 that is often referred to as a macrocell. The geographic extent of the macrocell 24 depends on the capabilities of the macrocell base station 22 and the surrounding geography.

Within the macrocell 24, each femtocell base station 30 provides wireless communications within a corresponding femtocell 32. A femtocell is a radio coverage area. In this example, the radio coverage area of the femtocell 32 is much less than that of the macrocell 24. For example, the femtocell 32 corresponds in size to a user's office or home.

As shown in Figure 1, the network 10 is managed by a radio network controller, RNC, 170. The radio network controller, RNC, 170 controls the operation, for example by communicating with macrocell base stations 22 via a backhaul communications link 160. The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. For circuit-switched traffic, a mobile switching centre (MSC)250 is provided with which the radio network controller 170 may communicate. The mobile switching centre 250 communicates with a circuit-switched network such as a public switched telephone network (PSTN) 210. For packet-switched traffic, the radio network controller 170 communicates with serving general packet radio service support nodes (SGSNs) 220 and a gateway general packet radio support node (GGSN) 180. The GGSN then communicates with a packet-switch core 190 such as, for example, the Internet.

The MSC 250 , SGSN 220, GGSN 180 and operator IP network 215 constitute a so-called core network 253. The SGSN 220 and GGSN 180 are connected by an operator IP network 215 to a femtocell controller/gateway 230.

The femtocell controller/gateway 230 is connected via the Internet 190 to the femtocell base stations such as denoted 30. These connections to the femtocell controller/gateway 230 are broadband Internet Protocol connections ("backhaul") connections.

It is possible for a mobile terminal 34 within the macrocell 24 to communicate with the macrocell base station 22 in known manner. When the mobile terminal 34 enters into a femtocell 32 for which the mobile terminal is registered for communications within the femtocell base station 30, it is desirable to handover the connection with the mobile terminal from the macrocell to the femtocell. In the example shown in Figure 1, the user of mobile terminal 34 is a preferred user of the nearest of the femtocells 32.

### Identifying handover targets

Basically speaking each of a group of femtos is provided with additional information that is used to help identify which femtos are neighbours and hence a call connection to a user terminal should likely to be handed over to. This information is the Uplink Scrambling code in use by the user terminal for the call connection. In a first example, the information is provided in advance of potential handovers. In a second example the information is provided upon a handover being required. These two examples are described in turn below.

### First Example: ULSC detection in identifying femto neighbours in advance of potential handovers

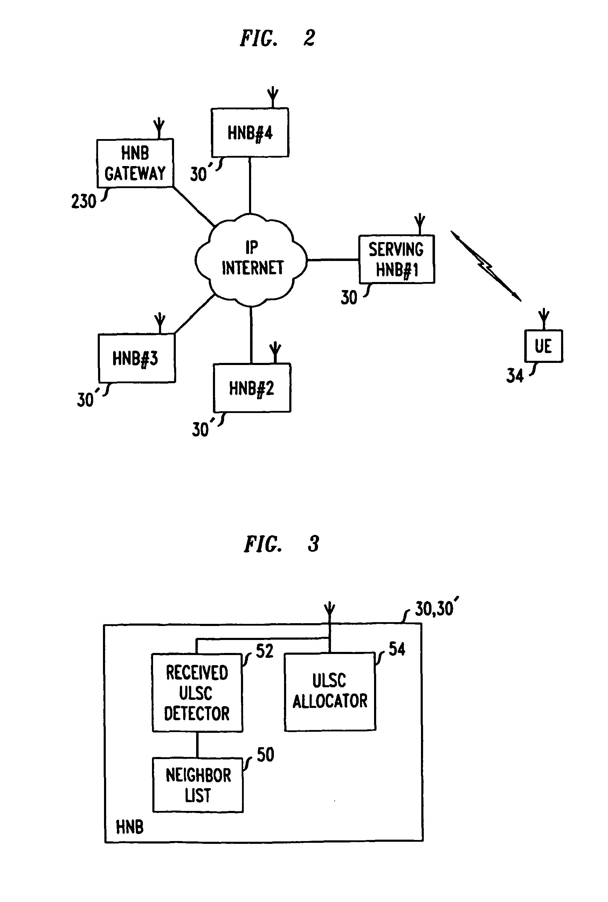

As shown in Figure 2, a serving (i.e. source) femto 30 is connected via the Internet 190 to the femto-gateway 230 and to various femtos, some of which are neighbours 30' to the serving femto. The serving femto 30 is call connected to the user terminal 34.

As shown in Figure 3, each femto 30,30' includes a neighbour list 50 which is a record of which femtos are neighbours to itself, a received UpLink Scrambling Code (ULSC) detector 52, and an Uplink Scrambling code allocator 54.

As will be described in more detail below, when a user terminal attaches to a femto, that femto allocates an ULSC to that user terminal. The ULSC is unique to that user terminal in respect of that femto, so the femto informs other femtos of the ULSC associated with the user terminal. These femtos then attempt to detect the user terminal by seeking to detect that ULSC in the signals that they receive. If a femto detects the user terminal, that femto informs the serving femto 30. The serving femto 30 thereby determines that this femto is a neighbour because the user terminal is within radio coverage of both these femtos.

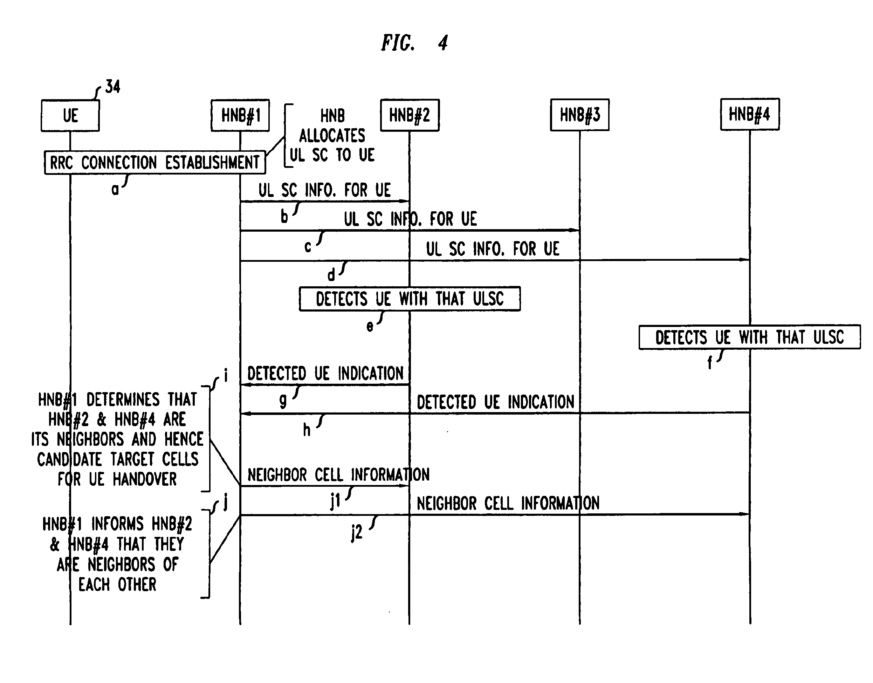

This is shown in more detail in Figure 4.

As shown in Figure 4, the user terminal 34 establishes (step a) a Radio Resource Control (RRC) connection with the serving femto, here denoted HNB#1. As part of this RRC connection establishment, the serving femto allocates a unique uplink scrambling code (ULSC) to the user terminal. The serving femto then informs (steps b,c,d) other femtos, such as HNB#2, HNB#3, and HNB#4, of this ULSC allocation. The femtos that are informed of the ULSC to look out for, are those considered to belong to the same group as the serving femto, in this example namely those in the same commercial premises as the serving femto.

These other femtos then attempt to detect the user terminal by searching for this ULSC in received signals, and in this example HNB#2 detects (step e) the user terminal and HNB#4 detects (step f) the user terminal. Accordingly, HNB#2 sends (step g) an indication to the serving femto HNB#L that it has detected the user terminal, and HNB#4 sends (step h) an indication to the serving femto HNB#1 that it has detected the user terminal. Additionally, HNB#2 and HNB#4 each make (not shown) an internal record (in their so-called neighbour lists) that HNB#1 is a neighbour as they detected the user terminal using the uplink scrambling code allocated to the user terminal by HNB#1.

In consequence, HNB#1 determines (step i) that HNB#2 and HNB#4 are its neighbours, but after a suitable period of time in which indication of user terminal detection by HNB#3 is not received, HNB#3 is not a neighbour of HNB#1.

By repeating the above process for a small number of user terminals, the serving femto builds up its knowledge of which other femtos are its neighbours. As described below the serving femto uses this knowledge to aid in determining the appropriate femto to be the target femto for handover.

The serving femto HNB#1 informs (step j) each of the femtos identified as neighbours of the identities of the other neighbours. Specifically, HNB#1 sends (step j1) information of HNB#2 to HNB#4 indicating that they are neighbours of each other and sends (step j2) information of HNB#4 to HNB#2 indicating that they are neighbours of each other.

### Selection of handover target

Later, when a user terminal wishes to perform a handover, the serving femto HNB#1 uses both information from the user terminal's measurements of, for example, primary scrambling codes in the best quality signal detected by the user terminal, together with information as to its likely neighbours from step i shown in Figure 4 and described above, in order to identify the best target cell.

### Other details about First Example

The above described process for identifying femto neighbours is repeated periodically in this example. (In an otherwise similar example (not shown) the process is undertaken upon each reboot of the femto). The identification of which femtos are neighbours, sometimes referred to as neighbour cell topology, is undertaken in real time even whilst calls are being processed.

### Second Example: ULSC detection in identifying femto neighbours upon handover being required

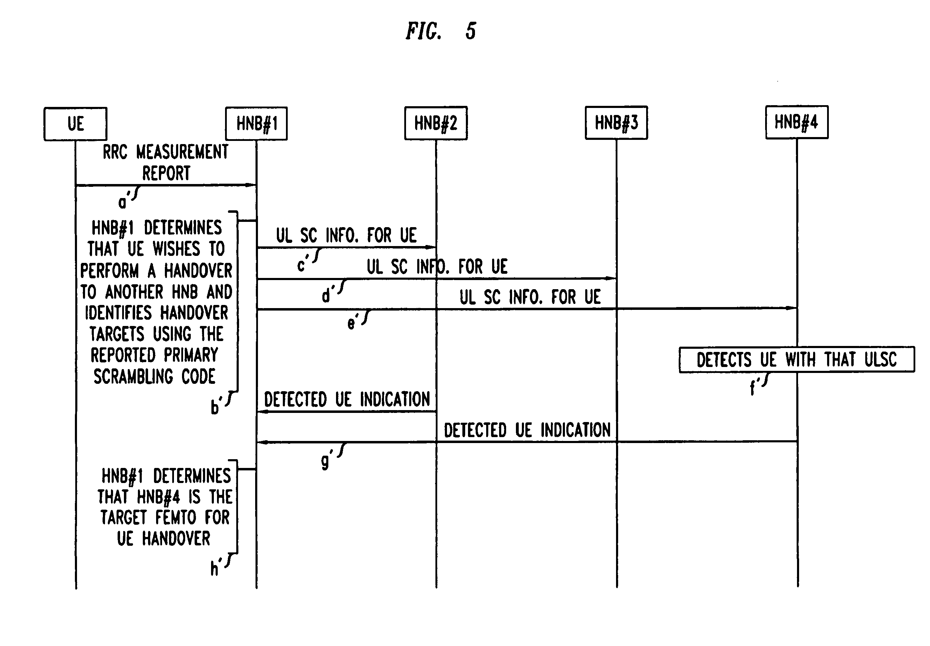

As shown in Figure 5, in an otherwise similar example to that described with reference to Figures 1 to 4, the femto target identification procedure is performed after a decision to handover is made.

As shown in Figure 5, the serving femto HNB#1 receives (step a') a radio resource control(RRC) measurement report from the user terminal. This report indicates the primary scrambling code (PSC) of the femto from which the user terminal receives the best quality signal. The serving femto then determines (step b') the potential handover candidate femtos as those in the neighbourhood that use that PSC, namely HNB#1, HNB#2 and HNB#3 in this example.

The serving femto then requests (steps c',d',e') the candidate femtos (which use that PSC) to use the uplink scrambling code that is in use by the user terminal in order to seek to detect the user terminal. The uplink scrambling code was previously allocated to the user terminal, namely at the time that the user terminal attached to the serving femto HNB#1. The requests include information as to the uplink scrambling code allocated to the user terminal. In addition, a timing offset in the signal received by the user terminal and included in the measurement report is included in the requests. This is to help the candidate femtos to identify even more quickly whether a signal, if any, that a candidate femto receives is from that user terminal.

The candidate femto that detects (step f) the user terminal using the specified ULSC (in this example HN#4) sends out (step g') an indication to the serving femto of that successful detection. Accordingly, the serving femto is informed (step h') of which is the femto handover target. The serving femto then initiates (not shown) the handover procedure to the handover target.

### Some Alternative Embodiments

In the example embodiments described above, the serving femto determined the handover target. In an alternative embodiment, this task is undertaken by the femto gateway.

In the above example embodiments, the femtos that are informed of the UpLink Scrambling Code, ULSC, to look out for, are those considered to belong to the same group as the serving femto, for example those in the same commercial premises as the serving femto. In some alternative embodiments, the user terminal reports to the serving femto the PSC of the best quality signal that it receives. The serving femto then selects only femtos using that PSC to determine whether they also detect the specified ULSC from the user terminal and hence are to be a handover target.

In the above embodiments, the handover target femto is identified by combining information from ULSC detection with expected PSC. In some embodiments, PSC information is not required, as the identification of which, amongst a few femtos in a commercial premises, receives the ULSC is enough to identify the femto handover target.

### General

The present invention may be embodied in other specific forms without departing from its essential characteristics. The scope of the invention is, therefore, indicated by the appended claims rather than by the foregoing description.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of handover of a call connection with a user terminal (34) from a first base station (30) for wireless telecommunications to a second base station for wireless communications comprising identifying the second base station from amongst a group of handover candidate base stations (30') by:
providing (Fig 4:b,c,d) the base stations in the group with the uplink scrambling code used by the user terminal,
the base stations in the group seeking to detect a signal from the user terminal encoded with that uplink scrambling code,
the or each base station that detects (Fig 4:e,f) said signal informing (Fig 4:g,h) the first base station of detecting said signal,
the first base station selecting as said second base station for handover the base station or one of the base stations that informed of detecting said signal,
**characterised in that** each base station comprises a memory in which is stored a list (50) of identified neighbours, and the or each base station that detects said signal records (Fig 4:j1,j2) the first base station as a neighbour.

2. A method according to claim 1, in which said identifying of said second base station is triggered by receiving a handover request from the user terminal.

3. A method according to claim 1, in which said identifying of said second base station is triggered by call connection establishment (Fig 4:a) between the user terminal and first base station.

4. A method according to any preceding claim, in which the group of handover candidate base stations is selected (Fig 5:b') as those base stations neighbouring the first base station that use the primary scrambling code of the signal detected by the user terminal, the primary scrambling code having been reported by the user terminal to the first base station.

5. A method according to any preceding claim, in which multiple of the base stations detect said signal and in response the first base station (30) informs each of the base stations that detect said signal about the other base stations that detect said signal so as to provide knowledge of their respective neighbours.

6. A method according to any preceding claim, in which said identifying is repeated for multiple user terminals, so as to build up information stored in the first base station (30) as to its neighbours.

7. A method according to any preceding claim in which the base stations are femtocell base stations.

8. A wireless telecommunications network comprising a group of handover candidate base stations and a network node,
the network node being configured to control handover of a call connection with a user terminal (34) from a first base station (30) for wireless telecommunications to a second base station for wireless communications, the network node comprising means for identifying the second base station from amongst the group of handover candidate base stations (30'),
the means for identifying comprising means to provide the base stations in the group with the uplink scrambling code used by the user terminal,
the base stations in the group being configured to seek to detect a signal from the user terminal encoded with that uplink scrambling code,
the or each base station that detects said signal being configured to inform the first base station of detecting said signal,
the network node being configured to select as said second base station for handover the base station or one of the base stations that informed of detecting said signal,
**characterised in that** each base station comprises a memory in which is stored a list of (50) identified neighbours, and, in use, the or each base station that detects said signal is adapted to record the first base station as a neighbour.

9. A network according to claim 8, in which the network node is said first base station (30).

10. A network according to claim 8 or claim 9, which comprises a decoder of a handover request from the user terminal, in which the means for identifying is adapted, in use, to be triggered to identify said second base station by decoding a handover request.

11. A network according to claim 8 or claim 9, in which the means for identifying is adapted, in use, to be triggered to identify said second base station by call connection establishment between the user terminal and first base station.

12. A network according to any of claims 8 to 11, in which the means for identifying is adapted to consider as the group of handover candidate base stations those base stations neighbouring the first base station that use the primary scrambling code of the signal detected by the user terminal, the primary scrambling code having been reported by the user terminal to the first base station.

13. A wireless telecommunications network according to any of claims 8 to 12, in which multiple of the base stations are adapted to, in use, detect said signal and the first base station is adapted to in response inform each of the base stations that detect said signal about the other base stations that detect said signal so as to provide knowledge of their respective neighbours.

## Patentansprüche

1. Verfahren zum Handover einer Anrufverbindung zu einem Benutzerendgerät (34) von einer ersten Basisstation (30) für drahtlose Kommunikation an eine zweite Basisstation für drahtlose Kommunikation, umfassend das Identifizieren der zweiten Basisstation unter einer Gruppe von Handover-Kandidatenbasisstationen (30') durch:
Bereitstellen (Fig. 4:b,c,d) des von dem Benutzerendgerät verwendeten Uplink-Verwürfelungscodes an die Basisstationen,
Versuchen, durch die Basisstation, ein Signal von dem mit dem besagten Uplink-Verwürfelungscode codierten Benutzerendgerät zu erkennen,
Informieren (Fig. 4:g,h) der ersten Basisstation über das Erkennen des besagten Signals durch die oder jede Basisstation, welche das besagte Signal erkennt (Fig. 4:e,f),
Auswählen, durch die erste Basisstation, der Basisstation oder einer der Basisstationen, welche das Erkennen des Signals gemeldet haben, als die besagte zweite Basisstation für das Handover,
**dadurch gekennzeichnet, dass** jede Basisstation einen Speicher umfasst, in welchem eine Liste (50) der identifizierten Nachbarn gespeichert ist, und dass die oder jede Basisstation, welche das besagte Signal erkennt, die erste Basisstation als einen Nachbarn erfasst (Fig. 4:j1,j2).

2. Verfahren nach Anspruch 1, wobei das besagte Identifizieren der besagten zweiten Basisstation durch den Empfang einer Handover-Anforderung von dem Benutzerendgerät ausgelöst wird.

3. Verfahren nach Anspruch 1, wobei das besagte Identifizieren der besagten zweiten Basisstation durch den Aufbau der Anrufverbindung (Fig. 4:a) zwischen dem Benutzerendgerät und einer ersten Basisstation ausgelöst wird.

4. Verfahren nach einem beliebigen der vorstehenden Ansprüche, wobei die Gruppe der Handover-Kandidatenbasisstationen als solche mit der ersten Basisstation benachbarten Basisstationen, welche den Primärverwürfelungscode des von dem Benutzerendgerät erkannten Signals verwenden, ausgewählt wird (Fig 5:b'), wobei der Primärverwürfelungscode von dem Benutzerendgerät an die erste Basisstation gemeldet wurde.

5. Verfahren nach einem beliebigen der vorstehenden Ansprüche, wobei mehrere der Basisstationen das besagte Signal erkennen und die erste Basisstation (30) in Reaktion darauf eine jede der Basisstationen, welche das besagte Signal erkennen, über die anderen Basisstationen, welche das Signal erkennen, informiert, um sie von ihren jeweiligen Nachbarn in Kenntnis zu setzen.

6. Verfahren nach einem beliebigen der vorstehenden Ansprüche, wobei das besagte Identifizieren für mehrere Benutzerendgeräte wiederholt wird, um in der ersten Basisstation (30) gespeicherte Informationen in Bezug auf deren Nachbarn zu erstellen.

7. Verfahren nach einem beliebigen der vorstehenden Ansprüche, wobei die Basisstationen Femtozellen-Basisstationen sind.

8. Drahtloses Kommunikationsnetzwerk, welches eine Gruppe von Handover-Kandidatenbasisstationen und einen Netzwerkknoten umfasst,
wobei der Netzwerkknoten für die Steuerung des Handover einer Anrufverbindung zu einem Benutzerendgerät (34) von einer ersten Basisstation (30) für drahtlose Telekommunikation an eine zweite Basisstation für drahtlose Kommunikation konfiguriert ist, wobei der Netzwerkknoten ein Mittel zum Identifizieren der zweiten Basisstation unter der Gruppe von Handover-Kandidatenbasisstationen (30') umfasst,
wobei das Mittel zum Identifizieren ein Mittel zum Bereitstellen des von dem Benutzerendgerät verwendeten Uplink-Verwürfelungscodes umfasst,
wobei die Basisstationen in der Gruppe dafür konfiguriert sind, zu versuchen, ein mit diesem Uplink-Verwürfelungscode codiertes Signal von dem Benutzerendgerät zu erkennen,
wobei die oder jede Basisstation, welche das besagte Signal erkennt, für das Informieren der ersten Basisstation über das Erkennen des besagten Signals konfiguriert ist,
wobei der Netzwerkknoten für das Auswählen der Basisstation oder einer der Basisstationen, die das Erkennen des besagten Signals gemeldet haben, als die besagte zweite Basisstation für das Handover konfiguriert ist,
**dadurch gekennzeichnet, dass** jede Basisstation einen Speicher umfasst, in welchem eine Liste (50) der identifizierten Nachbarn gespeichert ist, und dass bei Betrieb die oder jede Basisstation, welche das besagte Signal erkennt, dazu ausgelegt ist, die erste Basisstation als einen Nachbarn zu erfassen.

9. Netzwerk nach Anspruch 8, wobei der Netzwerkknoten die besagte erste Basisstation (30) ist.

10. Netzwerk nach Anspruch 8 oder Anspruch 9, umfassend einen Decoder einer Handover-Anforderung von dem Benutzerendgerät, wobei das Mittel zum Identifizieren bei Betrieb angesteuert werden kann, um die besagte zweite Basisstation durch Decodieren einer Handover-Anforderung zu identifizieren.

11. Netzwerk nach Anspruch 8 oder 9, wobei das Mittel zum Identifizieren bei Betrieb für das Identifizieren der besagten zweiten Basisstation durch den Aufbau einer Anrufverbindung zwischen dem Benutzerendgerät und der ersten Basisstation angesteuert werden kann.

12. Netzwerk nach einem beliebigen der Ansprüche 8 bis 11, wobei das Mittel zum Identifizieren dazu ausgelegt ist, diejenigen mit der ersten Basisstation benachbarten Basisstationen, welche den Primärverwürfelungscode des von dem Benutzerendgerät erkannten Signals verwenden, als die Gruppe von Handover-Kandidatenbasisstationen zu berücksichtigen, wobei der Primärverwürfelungscode von dem Benutzerendgerät an die erste Basisstation gemeldet wurde.

13. Drahtloses Telekommunikationsnetzwerk nach einem beliebigen der Ansprüche 8 bis 12, wobei mehrere der Basisstationen dazu ausgelegt sind, bei Betrieb das besagte Signal zu erkennen, und die erste Basisstation dazu ausgelegt ist, in Reaktion darauf eine jede der Basisstationen, welche das besagte Signal erkennen, über die anderen Basisstationen, welche das besagte Signal erkennen, zu informieren, um sie über ihre jeweiligen Nachbarn in Kenntnis zu setzen.

## Revendications

1. Procédé de transfert d'une connexion d'appel avec un terminal utilisateur (34) à partir d'une première station de base (30) pour des télécommunications sans fil vers une deuxième station de base pour des communications sans fil comprenant l'identification de la deuxième station de base parmi un groupe de stations de base candidates au transfert (30') :
en fournissant (Figure 4 : b, c, d) aux stations de base dans le groupe le code de brouillage de liaison montante utilisé par le terminal utilisateur,
les stations de base dans le groupe cherchant à détecter un signal provenant du terminal utilisateur codé avec ce code de brouillage de liaison montante,
la station de base ou chaque station de base qui détecte (Figure 4 : e, f) ledit signal informant (Figure 4 : g, h) la première station de base de la détection dudit signal,
la première station de base sélectionnant comme ladite deuxième station de base pour le transfert la station de base ou une des stations de base qui a informé de la détection dudit signal,
**caractérisé en ce que** chaque station de base comprend une mémoire dans laquelle est stockée une liste (50) de voisins identifiés, et la station de base ou chaque station de base qui détecte ledit signal enregistre (Figure 4 : j1, j2) la première station de base comme voisin.

2. Procédé selon la revendication 1, dans lequel ladite identification de ladite deuxième station de base est déclenchée en recevant une demande de transfert à partir du terminal utilisateur.

3. Procédé selon la revendication 1, dans lequel ladite identification de ladite deuxième station de base est déclenchée par l'établissement d'une connexion d'appel (Figure 4 : a) entre le terminal utilisateur et la première station de base.

4. Procédé selon l'une quelconque des revendications précédentes, dans lequel le groupe de stations de base candidates au transfert est sélectionné (Figure 5 : b') comme les stations voisines de la première station de base qui utilisent le code de brouillage principal du signal détecté par le terminal utilisateur, le code de brouillage principal ayant été rapporté par le terminal utilisateur à la première station de base.

5. Procédé selon l'une quelconque des revendications précédentes, dans lequel plusieurs des stations de base détectent ledit signal et, suite à cela, la première station de base (30) informe chacune des stations de base qui détectent ledit signal à propos des autres stations de base qui détectent ledit signal de sorte à connaître leurs voisins respectifs.

6. Procédé selon l'une quelconque des revendications précédentes, dans lequel ladite identification est répétée pour plusieurs terminaux utilisateurs, de sorte à accumuler des informations stockées dans la première station de base (30) concernant ses voisins.

7. Procédé selon l'une quelconque des revendications précédentes dans lequel les stations de base sont des stations de base femtocellulaires.

8. Réseau de télécommunication sans fil comprenant un groupe de stations de base candidates au transfert et un noeud de réseau,
le noeud de réseau étant configuré pour commander le transfert d'une connexion d'appel avec un terminal utilisateur (34) à partir d'une première station de base (30) pour des télécommunications sans fil vers une deuxième station de base pour des communications sans fil, le noeud de réseau comprenant un moyen d'identification de la deuxième station de base parmi le groupe de stations de base candidates au transfert (30'),
le moyen d'identification comprenant un moyen pour fournir aux stations de base dans le groupe le code de brouillage de liaison montante utilisé par le terminal utilisateur,
les stations de base dans le groupe étant configurées pour chercher à détecter un signal provenant du terminal utilisateur codé avec ce code de brouillage de liaison montante,
la station de base ou chaque station de base qui détecte ledit signal étant configurée pour informer la première station de base de la détection dudit signal,
le noeud de réseau étant configuré pour sélectionner comme ladite deuxième station de base pour le transfert la station de base ou une des stations de base qui a informé de la détection dudit signal,
**caractérisé en ce que** chaque station de base comprend une mémoire dans laquelle est stockée une liste (50) de voisins identifiés et, en fonctionnement, la station de base ou chaque station de base qui détecte ledit signal est adaptée pour enregistrer la première station de base comme voisin.

9. Réseau selon la revendication 8, dans lequel le noeud de réseau est ladite première station de base (30).

10. Réseau selon la revendication 8 ou la revendication 9, comprenant un décodeur d'une demande de transfert à partir du terminal utilisateur, dans lequel le moyen d'identification est adapté, en fonctionnement, pour être déclenché afin d'identifier ladite deuxième station de base en décodant une demande de transfert.

11. Réseau selon la revendication 8 ou la revendication 9, dans lequel le moyen d'identification est adapté, en fonctionnement, pour être déclenché afin d'identifier ladite deuxième station de base par l'établissement d'une connexion d'appel entre le terminal utilisateur et la première station de base.

12. Réseau selon l'une quelconque des revendications 8 à 11, dans lequel le moyen d'identification est adapté pour considérer comme groupe de stations de base candidates au transfert les stations de base voisines de la première station de base qui utilisent le code de brouillage principal du signal détecté par le terminal utilisateur, le code de brouillage principal ayant été rapporté par le terminal utilisateur à la première station de base.

13. Réseau de télécommunication sans fil selon l'une quelconque des revendications 8 à 12, dans lequel plusieurs des stations de base sont adaptées, en fonctionnement, pour détecter ledit signal et la première station de base est adaptée, suite à cela, pour informer chacune des stations de base qui détectent ledit signal à propos des autres stations de base qui détectent ledit signal de sorte à connaître leurs voisins respectifs.
